# FASCICULE DE BREVET EUROPEEN

(11) **EP 3 216 190 B1**
(45) Date de publication et mention de la délivrance du brevet: **26.06.2019**
(21) Numéro de dépôt: 15808707.2
(22) Date de dépôt: 04.11.2015
(51) Int. Cl.: H04L 29/06, H04L 29/08, H04W 12/02, H04W 4/70, H04L 9/32, H04L 9/08, H04W 4/60

(54) **SYSTEME DE SECURISATION DES ECHANGES ENTRE UN OBJET COMMUNICANT ET UNE PLATEFORME DE SERVICES**
SYSTEM ZUR SICHERUNG DES AUSTAUSCHES ZWISCHEN EINEM KOMMUNIZIERENDEN OBJEKT UND EINER DIENSTPLATTFORM
SYSTEM FOR SECURING EXCHANGES BETWEEN A COMMUNICATING OBJECT AND A SERVICE PLATFORM

(30) Priorité: 05.11.2014 FR 1460656
(43) Date de publication de la demande: 13.09.2017
(73) Titulaire: Orange, 75015 Paris (FR)
(72) Inventeur: CHADLI, Youssef, 78800 Houilles (FR); MOUQUET, Antoine, CS 50010 92326 Châtillon Cedex (FR)
(86) Numéro de dépôt international: PCT/FR2015/052982
(87) Numéro de publication internationale: WO 2016/071636

(56) Documents cités:
- EP-A1- 2 621 205
- US-A1- 2014 122 878
- "3rd Generation Partnership Project; Technical Specification Group Core Network and Terminals; Universal Subscriber Identity Module (USIM) Application Toolkit (USAT) (Release 12)", 3GPP STANDARD; 3GPP TS 31.111, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG6, no. V12.4.0, 2 juillet 2014 (2014-07-02), pages 1-130, XP050774535, cité dans la demande

## Description

La présente invention concerne les objets communicants aptes à effectuer certaines tâches sous le contrôle d'une plateforme de services, et/ou d'envoyer des données, par exemple des résultats de mesures, à une plateforme de services. Plus particulièrement, la présente invention concerne la sécurisation des échanges entre un tel objet communicant et la plateforme de services.

Les objets communicants visés par l'invention sont de nature extrêmement variée. Il peut s'agir, par exemple, d'un thermomètre, équipé éventuellement d'une alarme sonore, d'une balance, d'un capteur de présence, d'un feu de circulation dont on peut contrôler l'allumage des feux, d'une fenêtre dont on peut contrôler l'ouverture et la fermeture, d'un four offrant plusieurs possibilités de durée et de température de cuisson, et ainsi de suite.

De tels objets sont capables, par leurs actions, de faciliter de nombreux aspects de la vie en société. Ces actions peuvent par exemple rendre :
- des services de domotique pour contrôler les objets de la maison (on parle de « maison intelligente »), ou
- des services de gestion de la ville, tels que parcmètres, poubelles, feux de circulation ou radars, ou encore
- des services de santé, notamment pour la surveillance des malades à distance.

Le support physique des communications entre ces objets communicants et les plateformes de services peut être d'un type quelconque. Il peut s'agir aussi bien d'une liaison filaire (câble, Ethernet, fibre de verre, et ainsi de suite) que d'une liaison non-filaire (réseau cellulaire, WiFi, Bluetooth, et ainsi de suite).

Or le fait que ces objets puissent communiquer à distance les expose à des attaques malveillantes. Pour certains services, ces attaques peuvent avoir des répercussions désastreuses.

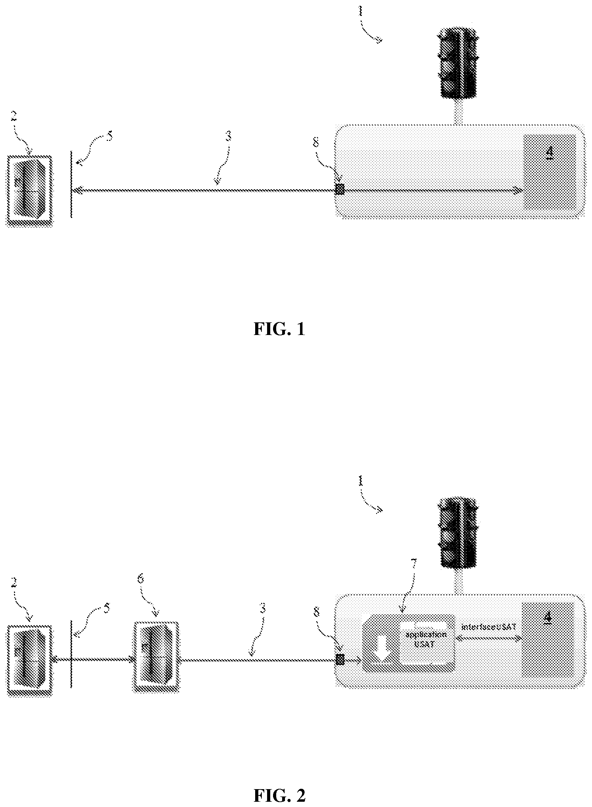

Considérons par exemple, comme illustré sur la **figure 1**, un feu de circulation 1, équipé d'un émetteur-récepteur 8 apte à émettre et à recevoir des messages de contrôle, et opéré à distance par une plateforme de services 2 (située, par exemple, au sein d'un poste de gendarmerie) de façon à adapter les changements de couleur (vert/orange/rouge) aux conditions de circulation ; une intrusion malveillante dans un tel système pourrait perturber la circulation automobile, avec de graves risques d'accidents.

Il est donc nécessaire dans le cadre de nombreux services de sécuriser les échanges entre l'objet communicant et la plateforme de services avec laquelle il communique.

Comme illustré sur la figure 1, on pourrait penser à sécuriser le canal de communication 3 entre l'objet communicant 1 (ou, plus précisément, le dispositif 4 installé par le fabricant et contrôlant les actions de cet objet communicant 1), et la plateforme de services 2 (ou, plus exactement son interface de commande 5). Ce canal sécurisé 3 pourrait par exemple utiliser une clé de chiffrement partagée entre le dispositif de contrôle 4 et l'interface de commande 5.

Mais une telle solution serait très peu commode à mettre en oeuvre sur le plan industriel. En effet :
- en ce qui concerne *les plateformes de services,* elles ne sont a priori pas équipées de moyens de production et de distribution de clés de chiffrement/déchiffrement, et
- en ce qui concerne *les objets communicants,* ils ne sont a priori pas équipés de moyens de chiffrement et déchiffrement ; de plus, l'intégration d'une clé de chiffrement personnalisée dans chaque objet communicant représenterait un alourdissement considérable du processus de fabrication et donc une augmentation sensible du coût de fabrication (notamment pour les objets communicants dont la structure est relativement simple, et le fonctionnement relativement rudimentaire).

EP2621205 A1 divulgue un procédé d'interrogation d'un terminal mettant en oeuvre une carte UICC capable de décrypter un message court.

La présente invention concerne donc un système de sécurisation des échanges entre une plateforme de services et un objet communicant comprenant un dispositif de contrôle. Ledit système est remarquable en ce qu'il comprend en outre un serveur, dit serveur de médiation, possédant des moyens pour recevoir un message, dit premier message, de la part de ladite plateforme de services, chiffrer ledit premier message et envoyer le premier message chiffré audit objet communicant, et en ce que l'objet communicant est en outre équipé d'une carte à puce distincte dudit dispositif de contrôle et possédant des moyens pour déchiffrer ledit premier message chiffré et envoyer le premier message déchiffré au dispositif de contrôle, les opérations de chiffrement et de déchiffrement étant réalisées au moyen d'au moins une clé secrète partagée entre le serveur de médiation et ladite carte à puce.

On notera que, dans le cadre de la présente invention, on désigne par « carte à puce » un circuit intégré, par exemple du type « *Universal Integrated Circuit Card* » (UICC) selon la norme ISO-7816. Il peut s'agir notamment d'une « carte USIM » telle que définie dans les spécifications TS 31.102 et TS 21.1112 du 3GPP (« *Third Generation Partnership Project* »), ou d'une « carte SIM » telle que définie dans la spécification TS 51.0111 du 3GPP, ou de tout autre objet analogue associé à un opérateur de télécommunications.

On notera également que ledit serveur de médiation, ainsi que ladite plateforme de services, peuvent comprendre un seul serveur physique, ou plusieurs serveurs physiques selon une architecture distribuée.

Ledit premier message peut par exemple contenir une ou plusieurs commandes d'actionnement de l'objet communicant.

Ainsi, l'invention propose de tirer profit du fait qu'il existe déjà un procédé de distribution de clés de chiffrement/déchiffrement qui est à la fois très répandu et très fiable, à savoir la distribution de cartes à puce sous la responsabilité des opérateurs de télécommunications. La carte à puce et le serveur de médiation selon l'invention pourront par exemple être commodément gérés par un même opérateur de télécommunications.

Par ailleurs, les cartes à puce classiques embarquent un microprocesseur, et sont programmables : il est donc parfaitement possible de programmer une carte à puce (par exemple, au moyen d'une « *applet* » Java) de manière à ce qu'elle soit capable de chiffrer ou déchiffrer des messages avec une clé de chiffrement/déchiffrement stockée de manière sécurisée dans la carte à puce.

On notera que les messages de contrôle échangés entre la carte à puce et le dispositif de contrôle n'auront pas nécessairement à être chiffrés, notamment dans le cas où ces deux éléments sont intégrés dans un boîtier considéré comme inviolable. Par ailleurs, s'il apparaît que le lien entre la plateforme de services et le serveur de médiation est sensible à des intrusions malveillantes, les échanges entre ces deux entités pourront naturellement être chiffrés ou signés.

Quoiqu'il en soit, la solution selon l'invention est avantageusement simple et peu coûteuse, car les gérants de la plateforme de services n'auront pas à se soucier de la production et de la distribution de clés de chiffrement/déchiffrement. Par ailleurs, la carte à puce sera de préférence incorporée dans le boîtier de l'objet communicant qu'elle équipe, de sorte que les fabricants d'objets communicants auront seulement besoin de sceller une carte à puce (telle qu'une « *embedded SIM* ») dans chaque objet communicant, ou de prévoir, dans chaque objet communicant, un logement standard pour une carte à puce (ainsi que les connexions entre la carte à puce et le dispositif de contrôle).

On notera que, dans le domaine de la téléphonie mobile, les cartes à puce sont classiquement utilisées en début de communication téléphonique pour l'authentification mutuelle entre l'utilisateur du téléphone et le réseau mobile, et pour la production d'une clé de session, mais que, suite à ces étapes préalables, la communication est chiffrée/déchiffrée par le téléphone sans aucune participation de la carte à puce. Au contraire, selon la présente invention, toutes les communications entre la plateforme de services et le dispositif de contrôle de l'objet communicant sont interceptées, et chiffrées/déchiffrées, par la carte à puce.

Selon des caractéristiques particulières, ladite carte à puce possède en outre des moyens pour recevoir un message, dit second message, de la part dudit dispositif de contrôle, et chiffrer ledit second message, et ledit serveur de médiation possède en outre des moyens pour recevoir le second message chiffré de la part dudit objet communicant, déchiffrer ledit second message chiffré et envoyer le second message déchiffré à ladite plateforme de services, les opérations de chiffrement et de déchiffrement étant réalisées au moyen d'au moins une clé secrète partagée entre ledit serveur de médiation et la carte à puce.

Par exemple, dans un système de sécurisation selon l'invention comprenant, d'une part, un seul serveur de médiation physique, et d'autre part une plateforme de services constituée de deux serveurs physiques situés à une certaine distance l'un de l'autre, ledit premier message peut être envoyé au serveur de médiation par l'un des serveurs de la plateforme de services, et ledit second message peut être envoyé par le serveur de médiation à l'autre serveur de la plateforme de services.

Le second message peut par exemple contenir une confirmation d'exécution (ou une notification d'échec d'exécution) par l'objet communicant d'une commande d'actionnement contenue dans le premier message. Selon une autre application, le second message peut contenir des résultats de mesures effectuées par l'objet communicant.

Selon des caractéristiques particulières, ladite carte à puce embarque une application conforme à la norme USAT (« *USIM Application Toolkit »).*

Grâce à ces dispositions, on peut commodément établir, entre le serveur de médiation et la carte à puce, un canal de communication mettant en oeuvre le protocole IP (« *Internet Protocol* »). Les communications entre le serveur de médiation et la carte à puce pourront ainsi avantageusement transiter via n'importe quel réseau IP, tel qu'un réseau Internet, GPRS (« *General Packet Radio Service* ») ou UMTS (« *Universal Mobile Telecommunications System* »).

Selon d'autres caractéristiques particulières, le canal de communication entre la carte à puce et ledit dispositif de contrôle (que nous appellerons « canal local ») met en oeuvre le protocole IP.

Selon encore d'autres caractéristiques particulières, les fonctionnalités de l'objet communicant sont représentées comme des ressources bien identifiées, et la carte à puce contrôle ces ressources identifiées au moyen de commandes génériques.

Grâce à ces dispositions, le contrôle de l'objet communicant par la carte à puce requiert moins de ressources d'exécution que lorsque ledit canal local met en oeuvre le protocole IP. On notera à cet égard que le fait que le canal de communication entre le serveur de médiation et la carte à puce mette en oeuvre le protocole IP n'implique pas que ledit canal local doive, lui aussi, mettre en oeuvre le protocole IP.

Corrélativement, l'invention concerne un procédé de sécurisation des échanges entre une plateforme de services et un objet communicant comprenant un dispositif de contrôle. Ledit procédé est remarquable en ce qu'il comprend les étapes suivantes :
- ladite plateforme de services envoie à un serveur, dit serveur de médiation, un message, dit premier message,
- ledit serveur de médiation chiffre ledit premier message, et envoie le premier message chiffré audit objet communicant,
- ledit premier message chiffré est déchiffré par une carte à puce, distincte dudit dispositif de contrôle, équipant l'objet communicant, et
- ladite carte à puce transmet le premier message déchiffré audit dispositif de contrôle,
   les opérations de chiffrement et de déchiffrement étant réalisées au moyen d'au moins une clé secrète partagée entre le serveur de médiation et la carte à puce.

Selon des caractéristiques particulières, ledit procédé comprend en outre les étapes suivantes :
- ledit dispositif de contrôle transmet un message, dit second message, à ladite carte à puce,
- ledit second message est chiffré par la carte à puce,
- le second message chiffré est envoyé par l'objet communicant audit serveur de médiation, et
- le serveur de médiation déchiffre le second message chiffré, et envoie le second message déchiffré à ladite plateforme de services,
   les opérations de chiffrement et de déchiffrement étant réalisées au moyen d'au moins une clé secrète partagée entre le serveur de médiation et la carte à puce.

Les avantages offerts par ce procédé sont essentiellement les mêmes que ceux offerts par le système de sécurisation succinctement exposé ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de sécurisation succinctement exposé ci-dessus, lorsqu'il est exécuté sur un ordinateur.

Les avantages offerts par ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1, déjà décrite ci-dessus, représente un système comprenant un feu de circulation et une plateforme de services reliés par un canal sécurisé, selon l'art antérieur,
- la figure 2 représente un système comprenant un feu de circulation et une plateforme de services reliés par un canal sécurisé, selon un mode de réalisation de l'invention,
- la figure 3 représente une première variante du mode de réalisation représenté sur la figure 2,
- la figure 4 représente une deuxième variante du mode de réalisation représenté sur la figure 2,
- la figure 5 représente une troisième variante du mode de réalisation représenté sur la figure 2, et
- la figure 6 représente une quatrième variante du mode de réalisation représenté sur la figure 2.

Dans le cadre de la présente invention, on considère un objet communicant 1 commandé à distance par une plateforme de services 2.

Selon l'invention, l'objet communicant 1 est équipé d'une carte à puce 7 distincte du dispositif de contrôle 4. Les messages de contrôle échangés entre le dispositif de contrôle 4 et la plateforme de services 2 passent par cette carte à puce 7 et par un serveur de médiation 6. En outre, le canal reliant la carte à puce 7 au serveur de médiation 6 est sécurisé par chiffrement desdits messages, les opérations de chiffrement et de déchiffrement étant réalisées au moyen d'une ou plusieurs clés secrètes partagées entre la carte à puce 7 et le serveur de médiation 6. Cette ou ces clés secrètes peuvent être stockées dans la carte à puce 7 de manière classique.

On notera que, selon l'invention, le dispositif de contrôle 4 n'accepte que les messages de contrôle provenant de la carte à puce 7.

On va décrire à présent deux modes de réalisation du procédé de sécurisation selon l'invention.

Selon un premier mode de réalisation, la plateforme de services 2 actionne à distance l'objet communicant 1, par exemple pour commander un changement de couleur de feu si l'objet communicant 1 est un feu de circulation. Ce premier mode de réalisation comprend les étapes suivantes.

Selon une étape S1, la plateforme de services 2 envoie au serveur de médiation 6 un message M contenant une commande d'actionnement.

Selon une étape S2, le serveur de médiation 6 chiffre ledit message M.

Selon une étape S3, le serveur de médiation 6 envoie le message chiffré à l'objet communicant 1.

Selon une étape S4, ledit message chiffré est déchiffré par la carte à puce 7 équipant l'objet communicant 1.

Enfin, selon une étape S5, la carte à puce 7 envoie le message déchiffré au dispositif de contrôle 4, qui actionne alors (ou du moins tente d'actionner) l'objet communicant (de façon connue en soi).

Optionnellement, l'objet communicant envoie en outre à la plateforme de services, conformément à l'invention, un message de confirmation d'exécution (ou une notification d'échec d'exécution) de la commande d'actionnement par l'objet communicant.

Selon un deuxième mode de réalisation du procédé de sécurisation, la plateforme de services 2 commande à l'objet communicant 1 de lui fournir des données qu'il a collectées, par exemple une mesure de température si l'objet communicant 1 est un thermomètre. Ce deuxième mode de réalisation comprend les étapes suivantes.

Selon une étape S'1, suite à des instructions envoyées conformément à l'invention par la plateforme de services, le dispositif de contrôle 4 collecte des données (de façon connue en soi), et transmet un message M' contenant ces données à la carte à puce 7 équipant l'objet communicant 1.

Selon une étape S'2, ledit message M' est chiffré par la carte à puce 7.

Selon une étape S'3, le message chiffré est envoyé par l'objet communicant 1 au serveur de médiation 6.

Selon une étape S'4, le serveur de médiation 6 déchiffre le message chiffré.

Enfin, selon une étape S'5, le serveur de médiation 6 envoie le message déchiffré à la plateforme de services 2.

On va décrire à présent, en référence à la **figure 2**, un mode de réalisation du système de sécurisation selon l'invention.

Dans ce mode de réalisation, la carte à puce 7 embarque (et met en oeuvre) une application conforme à la norme USAT (« *USIM Application Toolkit* »).

On rappelle à cet égard que la spécification TS 31.111 du 3GPP et la norme TS 102 223 de l'ETSI (« *European Telecommunications Standards Institute* ») définissent les possibilités de contrôle d'un terminal par une carte à puce qui y est hébergée : l'ensemble de ces possibilités constitue la norme USAT. Les possibilités offertes par cette norme comprennent notamment :
- le contrôle de l'interaction entre le terminal et son utilisateur via l'écran du terminal et/ou via des tonalités sonores ;
- l'envoi et la réception de messages SMS (« *Short Message Service* »), MMS (« *Multimedia Messaging Service* ») et USSD (« *Unstructured Supplementary Service Data* ») ;
- le contrôle des appels entrants et sortants ;
- l'exécution de commandes « AT » (il s'agit de commandes permettant de contrôler la gestion de l'accès du terminal au réseau mobile ainsi que la gestion de certaines procédures des services conversationnels) ;
- l'affichage d'une page Web par un navigateur présent dans le terminal ;
- le contrôle de l'exécution d'une application hébergée dans le terminal, par exemple lancement/arrêt ; et
- l'établissement d'un canal IP de communication ; ce canal de communication peut être un canal local établi entre l'application USAT et une application dans le terminal, ou un canal établi entre l'application USAT et une application distante dans le réseau.

Le contrôle de ces procédures se fait par des commandes appelées « commandes USAT ». Une application utilisant ces commandes est appelée « application USAT ».

Dans le présent mode de réalisation du système de sécurisation selon l'invention, la carte à puce 7 est donc munie d'une application USAT. En outre, on établit de préférence un canal IP entre la carte à puce 7 et le serveur de médiation 6 ; cela peut se faire commodément au moyen de la commande USAT appelée « *Open Channel* », qui permet à la carte à puce 7 de demander à l'objet communicant 1 d'établir ce canal IP.

On va décrire à présent plusieurs variantes de ce mode de réalisation.

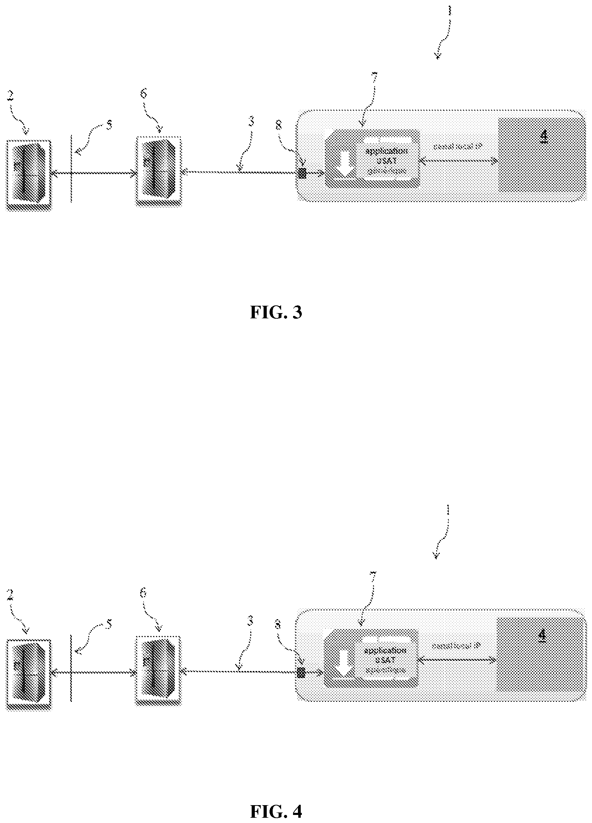

Selon une première variante, illustrée sur la **figure 3** :
- on établit un canal IP entre la carte à puce 7 et le dispositif de contrôle 4, par exemple en utilisant la commande USAT « *Open Channel* » mentionnée ci-dessus, et
- l'application USAT est générique.

Cette première variante présente notamment l'avantage que l'application USAT embarquée dans la carte à puce 7 peut fonctionner avec n'importe quel type d'objet communicant 1, car elle ne fait que relayer les messages de contrôle.

Selon une deuxième variante, illustrée sur la **figure 4**, on établit un canal IP entre la carte à puce 7 et le dispositif de contrôle 4, comme dans la première variante.

Mais, dans cette deuxième variante, l'application USAT, au lieu d'être générique, est spécifique au service fourni par l'objet communicant 1, et apte à mettre en oeuvre une logique de service adéquate ; l'application USAT ne se contente donc pas de relayer les messages entre la plateforme de services et le dispositif de contrôle 4.

L'application USAT étant spécifique au service et au type d'objet communicant 1, elle ne peut être intégrée par construction dans toutes les cartes à puce destinées à mettre en oeuvre l'invention. L'application USAT pour un service donné peut être pré-provisionnée dans la carte à puce destinée à ce service, ou téléchargée et installée dans la carte à puce après la mise en service de l'objet communicant 1, au moyen, par exemple, du mécanisme OTA (« *Over The Air* »).

Un avantage de cette deuxième variante est qu'elle permet de déporter l'exécution d'une partie de la logique (intelligence) de service dans la carte à puce ; on peut ainsi bénéficier des capacités d'exécution de la carte à puce, et décharger la plateforme de services 2.

On notera toutefois que l'utilisation, dans les première et deuxième variantes, d'un canal local mettant en oeuvre le protocole IP implique une certaine complexité de fonctionnement, laquelle résulte, notamment, de l'attribution d'adresses IP, du maintien du canal IP, et de l'encapsulation des commandes dans des paquets IP.

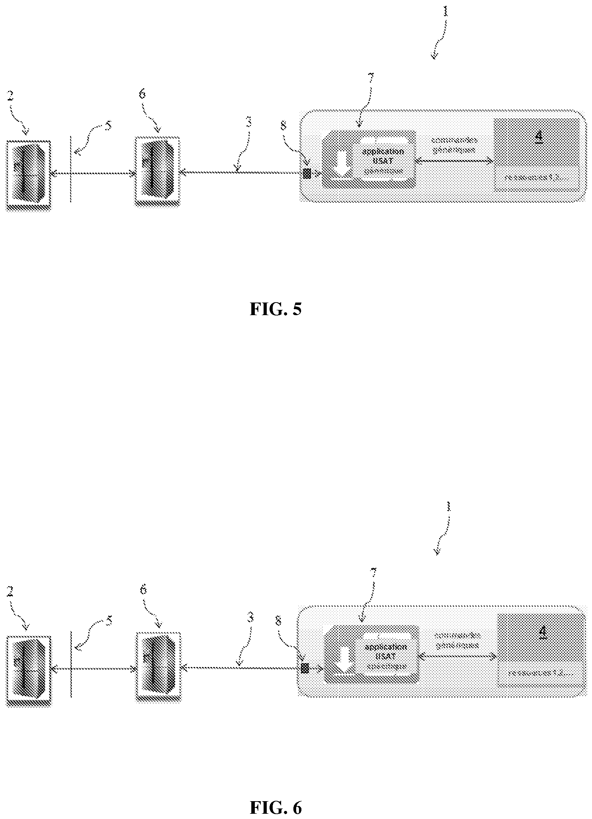

C'est pourquoi, selon une troisième variante, illustrée sur la **figure 5**, les fonctionnalités de l'objet communicant 1 sont représentées comme des ressources bien identifiées ; par exemple, si l'objet communicant 1 est un four, on identifie une ressource « thermostat » (pouvant prendre une série de valeurs correspondant à la gamme de températures accessibles), et une ressource « mode de chaleur » (pouvant prendre une valeur pour le mode « normal » et une autre valeur pour le mode « chaleur tournante »).

La plateforme de services 2 connaît l'identification des ressources correspondant aux fonctionnalités de l'objet communicant 1, et peut utiliser des messages de format standard (c'est-à-dire dont la syntaxe et la sémantique sont normalisées), par exemple de format HTTP (« *Hypertext Transfer Protocol* ») pour manipuler les valeurs de ces ressources.

On définit alors des commandes génériques pour permettre à l'application USAT de contrôler ces ressources ; ces commandes génériques peuvent comprendre par exemple une commande « READ » pour lire la valeur courante d'une ressource, et une commande « UPDATE » pour modifier la valeur d'une ressource. Or les normes TS 102 690 (« *Machine-to-Machine communications (M2M); Functional architecture* ») et TS 102 921 (« *Machine-to-Machine communications (M2M); mla, dla and mld interfaces* ») de l'ETSI définissent une syntaxe pour représenter les fonctionnalités d'un terminal comme des ressources contrôlables avec la technologie REST (« *Representational State Transfer* ») ; cette troisième variante marie donc la technologie REST à la technologie USAT.

Par ailleurs, dans cette troisième variante, l'application USAT est générique comme dans la première variante (décrite ci-dessus en référence à la figure 3).

Cette troisième variante présente notamment les avantages suivants :
- la plupart des objets communicants ont un nombre restreint de fonctionnalités : elles sont donc facilement identifiables ; et
- l'utilisation de commandes USAT génériques permet d'éviter l'établissement d'un canal IP entre la carte à puce 7 et le dispositif de contrôle 4, et donc de réduire la complexité de fonctionnement ; l'application USAT nécessite ainsi moins de ressources d'exécution, ce qui est particulièrement avantageux en l'occurrence car les ressources d'une carte à puce sont relativement limitées.

Une quatrième variante, illustrée sur la **figure 6**, est analogue à la deuxième variante (décrite ci-dessus en référence à la figure 4) en ce que l'application USAT n'est pas générique : elle est spécifique au service et apte à mettre en oeuvre une certaine logique de service ; l'application USAT ne se contente pas de relayer les messages entre la plateforme de services et le dispositif de contrôle 4.

Un avantage de cette quatrième variante est donc qu'elle permet de déporter l'exécution d'une partie de la logique (intelligence) de service dans la carte à puce ; on peut ainsi bénéficier des capacités d'exécution de la carte à puce, et décharger la plateforme de service 2.

L'application USAT étant spécifique au service et au type d'objet communicant 1, elle ne peut être intégrée par construction dans toutes les cartes à puce destinées à mettre en oeuvre l'invention. L'application USAT pour un service donné peut être pré-provisionnée dans les cartes à puce destinées à ce service, ou téléchargée et installée dans la carte à puce après la mise en service de l'objet communicant 1, au moyen, par exemple, du mécanisme OTA.

Enfin, contrairement à la deuxième variante, les fonctionnalités de l'objet communicant 1 sont représentées ici comme des ressources bien identifiées, et l'application USAT contrôle ces ressources identifiées au moyen de commandes génériques, analogues aux commandes génériques utilisées dans la troisième variante (décrite ci-dessus en référence à la figure 5), avec les avantages qui en résultent.

D'autres variantes que les quatre variantes décrites ci-dessus sont naturellement possibles dans le cadre de l'invention.

On notera pour terminer que l'invention peut être mise en oeuvre au sein d'un objet communicant, ou d'un serveur de médiation, au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre de l'un quelconque des procédés selon l'invention.

En effet, l'invention vise aussi un programme d'ordinateur téléchargeable depuis un réseau de communication comprenant des instructions pour l'exécution des étapes d'un procédé selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés selon l'invention.

## Revendications

1. Système de sécurisation des échanges entre une plateforme de services et un objet communicant comprenant un dispositif de contrôle, ledit système comprenant en outre un serveur, dit serveur de médiation (6), possédant des moyens pour recevoir un message, dit premier message, de la part de ladite plateforme de services (2), chiffrer ledit premier message et envoyer le premier message chiffré audit objet communicant (1), et ledit objet communicant (1) étant en outre équipé d'une carte à puce (7) distincte dudit dispositif de contrôle (4) et possédant des moyens pour déchiffrer ledit premier message chiffré et envoyer le premier message déchiffré au dispositif de contrôle (4), les opérations de chiffrement et de déchiffrement étant réalisées au moyen d'au moins une clé secrète partagée entre le serveur de médiation (6) et ladite carte à puce (7).

2. Système de sécurisation selon la revendication 1, dans lequel ladite carte à puce (7) possède en outre des moyens pour recevoir un message, dit second message, de la part dudit dispositif de contrôle (4), et chiffrer ledit second message, et dans lequel ledit serveur de médiation (6) possède en outre des moyens pour recevoir le second message chiffré de la part dudit objet communicant (1), déchiffrer ledit second message chiffré et envoyer le second message déchiffré à ladite plateforme de services (2), les opérations de chiffrement et de déchiffrement étant réalisées au moyen d'au moins une clé secrète partagée entre ledit serveur de médiation (6) et la carte à puce (7).

3. Système de sécurisation selon la revendication 1 ou la revendication 2, dans lequel ladite carte à puce (7) embarque une application conforme à la norme USAT (« *USIM Application Toolkit* »).

4. Système de sécurisation selon la revendication 3, dans lequel ladite application USAT est générique.

5. Système de sécurisation selon la revendication 3, dans lequel ladite application USAT est spécifique au service fourni par l'objet communicant (1).

6. Système de sécurisation selon l'une quelconque des revendications 1 à 5, dans lequel le canal de communication entre la carte à puce (7) et ledit dispositif de contrôle (4) met en oeuvre le protocole IP.

7. Système de sécurisation selon l'une quelconque des revendications 1 à 5, dans lequel les fonctionnalités dudit objet communicant (1) sont représentées comme des ressources bien identifiées, et dans lequel ladite carte à puce (7) contrôle lesdites ressources identifiées au moyen de commandes génériques.

8. Procédé de sécurisation des échanges entre une plateforme de services et un objet communicant comprenant un dispositif de contrôle, comprenant les étapes suivantes :
- ladite plateforme de services (2) envoie (S1) à un serveur, dit serveur de médiation (6), un message, dit premier message,
- ledit serveur de médiation (6) chiffre (S2) ledit premier message, et envoie (S3) le premier message chiffré audit objet communicant (1),
- ledit premier message chiffré est déchiffré (S4) par une carte à puce (7), distincte dudit dispositif de contrôle (4), équipant l'objet communicant (1), et
- ladite carte à puce (7) transmet (S5) le premier message déchiffré audit dispositif de contrôle (4),
les opérations de chiffrement et de déchiffrement étant réalisées au moyen d'au moins une clé secrète partagée entre le serveur de médiation (6) et la carte à puce (7).

9. Procédé de sécurisation selon la revendication 8, comprenant en outre les étapes suivantes :
- ledit dispositif de contrôle (4) transmet (S'1) un message, dit second message, à ladite carte à puce (7),
- ledit second message est chiffré (S'2) par la carte à puce (7),
- le second message chiffré est envoyé (S'3) par l'objet communicant (1) audit serveur de médiation (6), et
- le serveur de médiation (6) déchiffre (S'4) le second message chiffré, et envoie (S'5) le second message déchiffré à ladite plateforme de services (2),
les opérations de chiffrement et de déchiffrement étant réalisées au moyen d'au moins une clé secrète partagée entre le serveur de médiation (6) et la carte à puce (7).

10. Moyen de stockage de données inamovible, ou partiellement ou totalement amovible, comportant des instructions de code de programme informatique pour l'exécution des étapes d'un procédé de sécurisation selon la revendication 8 ou la revendication 9.

11. Programme d'ordinateur téléchargeable depuis un réseau de communication et/ou stocké sur un support lisible par ordinateur et/ou exécutable par un microprocesseur, comprenant des instructions pour l'exécution des étapes d'un procédé de sécurisation selon la revendication 8 ou la revendication 9, lorsqu'il est exécuté sur un ordinateur.

## Patentansprüche

1. System zur Sicherung der Austauschvorgänge zwischen einer Dienstplattform und einem eine Kontrollvorrichtung enthaltenden kommunizierenden Objekt, wobei das System außerdem einen Vermittlungsserver (6) genannten Server enthält, der Einrichtungen besitzt, um eine erste Nachricht genannte Nachricht von der Dienstplattform (2) zu empfangen, die erste Nachricht zu verschlüsseln und die verschlüsselte erste Nachricht an das kommunizierende Objekt (1) zu senden, und das kommunizierende Objekt (1) außerdem mit einer Chipkarte (7) ausgestattet ist, die sich von der Kontrollvorrichtung (4) unterscheidet und Einrichtungen besitzt, um die verschlüsselte erste Nachricht zu entschlüsseln und die entschlüsselte erste Nachricht an die Kontrollvorrichtung (4) zu senden, wobei die Verschlüsselungs- und Entschlüsselungsvorgänge mittels mindestens eines vom Vermittlungsserver (6) und von der Chipkarte (7) gemeinsam genutzten Geheimschlüssels durchgeführt werden.

2. Sicherungssystem nach Anspruch 1, wobei die Chipkarte (7) außerdem Einrichtungen zum Empfang einer zweite Nachricht genannten Nachricht von der Kontrollvorrichtung (4) und zum Verschlüsseln der zweiten Nachricht besitzt, und wobei der Vermittlungsserver (6) außerdem Einrichtungen zum Empfang der verschlüsselten zweiten Nachricht vom kommunizierenden Objekt (1), zum Entschlüsseln der verschlüsselten zweiten Nachricht und zum Senden der entschlüsselten zweiten Nachricht an die Dienstplattform (2) besitzt, wobei die Verschlüsselungs- und Entschlüsselungsvorgänge mittels mindestens eines vom Vermittlungsserver (6) und von der Chipkarte (7) gemeinsam genutzten Geheimschlüssel durchgeführt werden.

3. Sicherungssystem nach Anspruch 1 oder nach Anspruch 2, wobei die Chipkarte (7) eine Anwendung entsprechend der Norm USAT ("*USIM Application Toolkit*") aufnimmt.

4. Sicherungssystem nach Anspruch 3, wobei die Anwendung USAT generisch ist.

5. Sicherungssystem nach Anspruch 3, wobei die Anwendung USAT für den vom kommunizierenden Objekt (1) gelieferten Dienst spezifisch ist.

6. Sicherungssystem nach einem der Ansprüche 1 bis 5, wobei der Kommunikationskanal zwischen der Chipkarte (7) und der Kontrollvorrichtung (4) das IP-Protokoll anwendet.

7. Sicherungssystem nach einem der Ansprüche 1 bis 5, wobei die Funktionen des kommunizierenden Objekts (1) als genau identifizierte Ressourcen dargestellt sind, und wobei die Chipkarte (7) die identifizierten Ressourcen mittels generischer Befehle steuert.

8. Sicherungsverfahren der Austauschvorgänge zwischen einer Dienstplattform und einem eine Kontrollvorrichtung enthaltenden kommunizierenden Objekt, das die folgenden Schritte enthält:
- die Dienstplattform (2) sendet (S1) an einen Vermittlungsserver (6) genannten Server eine erste Nachricht genannte Nachricht,
- der Vermittlungsserver (6) verschlüsselt (S2) die erste Nachricht und sendet (S3) die verschlüsselte erste Nachricht an das kommunizierende Objekt (1),
- die verschlüsselte erste Nachricht wird von einer sich von der Kontrollvorrichtung (4) unterscheidenden Chipkarte (7) entschlüsselt (S4), die zur Ausrüstung des kommunizierenden Objekts (1) gehört, und
- die Chipkarte (7) überträgt (S5) die entschlüsselte erste Nachricht an die Kontrollvorrichtung (4),
wobei die Verschlüsselungs- und Entschlüsselungsvorgänge mittels mindestens eines vom Vermittlungsserver (6) und von der Chipkarte (7) gemeinsam genutzten Geheimschlüssel durchgeführt werden.

9. Sicherungsverfahren nach Anspruch 8, das außerdem die folgenden Schritte enthält:
- die Kontrollvorrichtung (4) überträgt (S'1) eine zweite Nachricht genannte Nachricht an die Chipkarte (7),
- die zweite Nachricht wird von der Chipkarte (7) verschlüsselt (S'2),
- die verschlüsselte zweite Nachricht wird vom kommunizierenden Objekt (1) an den Vermittlungsserver (6) gesendet (S'3), und
- der Vermittlungsserver (6) entschlüsselt (S'4) die verschlüsselte zweite Nachricht und sendet (S'5) die entschlüsselte zweite Nachricht an die Dienstplattform (2),
wobei die Verschlüsselungs- und Entschlüsselungsvorgänge mittels mindestens eines vom Vermittlungsserver (6) und von der Chipkarte (7) gemeinsam genutzten Geheimschlüssel durchgeführt werden.

10. Nicht entfernbare oder teilweise oder vollständig entfernbare Datenspeichereinrichtung, die EDV-Programmcodeanweisungen für die Ausführung der Schritte eines Sicherungsverfahrens nach Anspruch 8 oder nach Anspruch 9 aufweist.

11. Computerprogramm, das von einem Kommunikationsnetzwerk heruntergeladen und/oder auf einem computerlesbaren Träger gespeichert und/oder von einem Mikroprozessor ausgeführt werden kann, das Anweisungen zur Ausführung der Schritte eines Sicherungsverfahrens nach Anspruch 8 oder nach Anspruch 9 enthält, wenn es auf einem Computer ausgeführt wird.

## Claims

1. System for securing exchanges between a services platform and a communicating object comprising a control device, said system furthermore comprising a server, termed mediation server (6), possessing means for receiving a message, termed first message, from said services platform (2), encrypting said first message and dispatching the encrypted first message to said communicating object (1), and said communicating object (1) being furthermore equipped with a chip card (7) distinct from said control device (4) and possessing means for decrypting said encrypted first message and dispatching the decrypted first message to the control device (4), the encryption and decryption operations being carried out by means of at least one secret key shared between the mediation server (6) and said chip card (7).

2. Securing system according to Claim 1, in which said chip card (7) furthermore possesses means for receiving a message, termed second message, from said control device (4), and encrypting said second message, and in which said mediation server (6) furthermore possesses means for receiving the encrypted second message from said communicating object (1), decrypting said encrypted second message and dispatching the decrypted second message to said services platform (2), the encryption and decryption operations being carried out by means of at least one secret key shared between said mediation server (6) and the chip card (7).

3. Securing system according to Claim 1 or Claim 2, in which said chip card (7) carries an application in accordance with the USAT ("*USIM Application Toolkit*") standard.

4. Securing system according to Claim 3, in which said USAT application is generic.

5. Securing system according to Claim 3, in which said USAT application is specific to the service provided by the communicating object (1).

6. Securing system according to any one of Claims 1 to 5, in which the communication channel between the chip card (7) and said control device (4) implements the IP protocol.

7. Securing system according to any one of Claims 1 to 5, in which the functionalities of said communicating object (1) are represented as well-identified resources, and in which said chip card (7) controls said identified resources by means of generic commands.

8. Method for securing exchanges between a services platform and a communicating object comprising a control device, comprising the following steps:
- said services platform (2) dispatches (S1) to a server, termed mediation server (6), a message, termed first message,
- said mediation server (6) encrypts (S2) said first message, and dispatches (S3) the encrypted first message to said communicating object (1),
- said encrypted first message is decrypted (S4) by a chip card (7), distinct from said control device (4), equipping the communicating object (1), and
- said chip card (7) transmits (S5) the decrypted first message to said control device (4),
the encryption and decryption operations being carried out by means of at least one secret key shared between the mediation server (6) and the chip card (7).

9. Securing method according to Claim 8, furthermore comprising the following steps:
- said control device (4) transmits (S'1) a message, termed second message, to said chip card (7),
- said second message is encrypted (S'2) by the chip card (7),
- the encrypted second message is dispatched (S'3) by the communicating object (1) to said mediation server (6), and
- the mediation server (6) decrypts (S'4) the encrypted second message, and dispatches (S'5) the decrypted second message to said services platform (2),
the encryption and decryption operations being carried out by means of at least one secret key shared between the mediation server (6) and the chip card (7).

10. Irremovable or partially or totally removable means for storing data, comprising computer program code instructions for the execution of the steps of a securing method according to Claim 8 or Claim 9.

11. Computer program downloadable from a communication network and/or stored on a medium readable by computer and/or executable by a microprocessor, comprising instructions for the execution of the steps of a securing method according to Claim 8 or Claim 9, when it is executed on a computer.
